**Europäisches Patentamt**

**European Patent Office**

**Office européen des brevets**

(19)

(11) Publication number: **0 073 801**
**B1**

(12) **EUROPEAN PATENT SPECIFICATION**

(45) Date of publication of patent specification: **06.07.88**

(51) Int. Cl.⁴: **B 01 D 3/30**

(21) Application number: **82900825.9**

(22) Date of filing: **15.03.82**

(86) International application number:
**PCT/HU82/00011**

(87) International publication number:
**WO 82/03184 30.09.82 Gazette 82/23**

(54) **PHASE-CONTACTING APPARATUS.**

(30) Priority: **16.03.81 HU 65781**

(43) Date of publication of application:
**16.03.83 Bulletin 83/11**

(45) Publication of the grant of the patent:
**06.07.88 Bulletin 88/27**

(84) Designated Contracting States:
**AT CH DE FR GB LI NL SE**

(56) References cited:
**DE-C-2 412 918**
**FR-A-1 335 976**
**FR-A-2 000 673**
**HU-B- 163 343**
**NL-A-6 613 227**
**SU-A- 286 961**
**SU-A- 298 337**

**I.F. Malezhik "Clapannye tarelki rektifikatsionnykh i absorbsionnykh apparatov 1971 TSNIITElpischeprom, Moskva, pages 12, fig. 9**

(73) Proprietor: **OLAJIPARI FÖVALLALKOZO ES TERVEZÖ VALLALAT**
**Schönherz Zoltán u. 16**
**H-1117 Budapest (HU)**

(72) Inventor: **KREKACS, Sändor**
**Juhász Gyula u. 2**
**H-1039 Budapest (HU)**
Inventor: **PALFI, Zoltán**
**Keselyü u. 1**
**H-1025 Budapest (HU)**

(74) Representative: **Ebbinghaus, Dieter et al**
**v. FÜNER, EBBINGHAUS, FINCK Patentanwälte**
**European Patent Attorneys Mariahilfplatz 2 & 3**
**D-8000 München 90 (DE)**

Courier Press, Leamington Spa, England.

EP 0 073 801 B1

## Description

The invention relates to a phase-contacting apparatus mainly in chemical industrial or environment protection establishments, in which a multiplicity of phase-contacting plates are arranged in a column, said plates permitting upward flow of a gas phase and downward flow of a liquid phase therethrough, whereby said liquid phase is supported by said plates, thus to bring said liquid phase into intimate contact to said gas phase, each of said phase-contacting plates comprises a plurality of flow-blocking units, each of said flow-blocking units is mounted pivotable about a transverse axis and is deflectable by the upward flow of the gas phase thus controlling the downward flow of the liquid phase, and at least part of the weight of each of said flow-blocking units about said transverse axis is counterbalanced.

Such phase-contacting apparatuses are extensively used in the chemical industry and chemical processing industry. Liquid, gas and gaseous agents of different specific weight and consisting of two or several phases are contacted in the columns, thereby ensuring the reaction, etc. of the components of the various phases. One of the groups of these apparatuses is the so-called plate-type, the further development and improvement of which is the tower provided with venting system.

It is known that the venting phase-contacting apparatuses are plate-shaped. Their characteristic feature is that the ascending vapour or gas opens the flow-blocking units — known by the experts under the name of "Glitschballast" — depending on the load, until the liquid passes out through the perforation in one of the cascade plates and trough the weir in case of the overflow plates.

These flow-blocking units known in the practice are extremely diversified. Thus for instance according to the French patent specification No. 1 237 299 they are discs, or catches, according to the DE—C—67 964 locking plates, and similar is the device described in the DD—B—2 115 338. But the solution according to the Hungarian patent specification No. 154 070 is also known, where the flow-blocking devices represent a ring system of different diameter, while according to the Hungarian patent specification No. 166 433 they are tilting elements with limited movement.

The common shortcoming of the generally accepted and used apparatuses known in the practice is, that they fundamentally determine the pressure loss caused by the weight, i.e. by the density and geometrical dimensions of the flow-blocking members.

This fact significantly limits the applicability or field of utilization of the mentioned apparatuses. Thus for instance the venting plate devices under vacuum operation mode — though for their favourable properties they would be in demand — have not gained general acceptance, or are useable only to a very limited extent.

Further, from SU—A—286 961 there is known a phase-contacting apparatus comprising flow-blocking members or valves which are formed by only one flat flap pivotally mounted on a solid plate with holes therein. The part of the valve flap which is located under the axis, i.e. the lighter part, significantly influences the cross-section for the free flow of fluids, since this part as well as the part above said axis simultaneously lock or open the holes of the valve plate. Therefore, the loading, i.e. the mass flow of fluids through said known apparatus, is insufficient.

In view of this state of the art it is the object of the present invention to overcome the above defects and disadvantages of the prior constructions, and to create a phase-contacting apparatus the loading of which is higher, thereby improving the efficiency.

This object is obtained by a phase-contacting apparatus of the generic kind in that each of said flow-blocking units comprises at least one elongated locking member pivotable about a transverse axis at one end thereof and at least one moment-equalizing member operatively connected with the same end of said locking member for balancing the torque applied to said locking member about said transverse axis, said locking members together forming the surfaces of said phase-contacting plates and solely opening or closing the free flow cross section of the fluids, whereas said moment-equalizing members do not affect the flow cross section of said fluids.

According to the invention the cross section of the streaming fluids, i.e. gas upwards and liquid downwards, is opened or closed solely by the locking members whereas the moment-equalizing members do not influence the cross section, i.e. do not open or lock. The fact that no base-sheet is required in the solution according to the invention means that the hole section, which is the effective cross section, is equal with the total surface of the locking members, i.e. the contacting of the phases is carried out on the total cross section of the column. As a result, loading, i.e. the mass flow of fluids of the apparatus containing flow-blocking units according to the invention, is much higher. Further, the pressure loss of the apparatus can be set to the required extent irrespective of the density and specific weight of the structural material and it is uniform in a wide loading range and suitable for improving the efficiency. Advantages of the flow-blocking unit according to the invention are prominent mainly in the apparatuses functioning with vacuum operation mode.

Advantageously at least one moment-equalizing member is formed for co-action with several locking members and is, if necessary, suitable for the simultaneous deflection of said locking members. This type of construction is used suitably by mounting it on a shaft. Its advantage is manifest in the simplified assembly.

Preferably the locking members and the moment-equalizing members are integral with each other and composed of the same material.

In a preferred embodiment of the invention the moment-equalizing members are formed by elongated strips arranged at about 90° to the transverse axis.

Conveniently the moment-equalizing members are spatial curvy geometrical configurations.

This solution is advantageous — due to its small space demand — when with the use of adjacent parallel shafts the transverse opening of the locking members is also ensured, and at the same time there is no need for a separate buffer element determining the extent of opening of the locking members, i.e. the separate is omissible as a result of the space geometry.

In another embodiment of the apparatus according to the invention between the locking members and the moment-equalizing members there are formed supporting flanges on which the flow-blocking units can turn about their transverse axes.

This construction form is used to advantage especially in case of polluted agents, when the flow-blocking units sit on the deposited pollution.

Advantageously the moment-equalizing members comprise spring means, whereby said spring means preferably is a coil spring. This solution is used in case of shutting off the perforations, the moment-equalizing member acting with the coil spring, consequently its space demand is small. However, the spring means can also be formed by a torsion spring.

Embodiments of the invention are further explained by referring to the accompanying drawings, wherein

Fig. 1 is a side view of one flow-blocking unit of a phase-contacting apparatus;

Fig. 2 is a perspective view of a flow-blocking unit with three locking members and one common moment-equalizing member;

Fig. 3 is a perspective view of a flow-blocking unit comprising four locking members and two moment-equalizing members;

Fig. 4 is a perspective view of a flow-blocking unit the moment-equalizing member of which is increased with a coil spring;

Fig. 5 is a perspective view of a flow-blocking unit with moment-equalizing members formed as spatial curves;

Fig. 6 is a side view of a flow-blocking unit comprising a supporting flange;

Fig. 7 is a side view of a flow-blocking unit comprising a torsion spring.

A flow-blocking unit according to the invention is formed with locking member 1 and moment-equalizing member 2 and operation of the two members is made possible by an element allowing the turn.

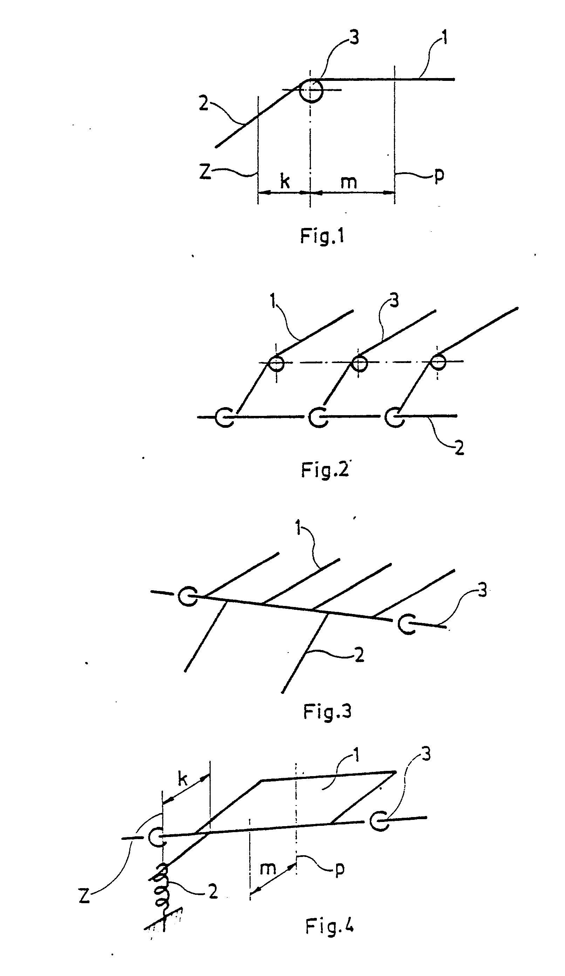

In the construction according to Figure 1, the locking member 1, moment-equalizing member 2 and element 3 allowing turn are made of a simple structural material, e.g. by bending. The formation allowing turn is an axis of rotation 3, where the moment-equalizing member has a moment arm "k" in the force line "z", while the locking member 1 has a moment arm "m" in force line "p".

In the construction according to Figure 2, the moment-equalizing member 2 co-acts with three locking members 1 and ensures the simultaneous opening and shutting of the locking members 1. The moment-equalizing member 2 and locking member 1 are built from separate elements. This type of construction is used suitably by mounting it on a shaft. Its advantage is manifest in the simplified assembly. This construction differs from the former one in that the flow-blocking units are loosely mounted on a shaft along the formulation 3 allowing the turn. The flow cross section is covered with several sets of flow-blocking unit which form the operating unit, i.e. the phase-contacting plate of the apparatus at the same time. This solution allows the formation of the plate incorporating alternatively opening flow-blocking units, whereby — owing to the mixing of the material at a higher rate — favourable efficiency can be attained. While the construction according to Figure 1 displays individually operating flow-blocking units, the construction according to Figure 2, shows the co-action of the groups which amounts to the already mentioned simplified assembly work.

In the construction according to Figure 3 the flow-blocking unit has several locking members 1 counterbalanced with less number of moment-equalizing members 2. The moment ratios correspond to those shown in Figure 2. It is advisable to use this solution preferably in a bearing-type setting. Its application advantage appears similarly in the further simplified assembly.

Figure 4, shows such construction where the locking member 1 is complemented with flexible moment-equalizing member. Here the moment arm "k" acts with the coil spring arranged in force line "z" on the force line "p" acting against the moment arm "m". The formation 3 allowing the turn is identical with the one shown in Figure 3. This solution is used to advantage in case of shutting off the perforations, the moment-equalizing member 2 acting with the coil spring, consequently its space demand is small.

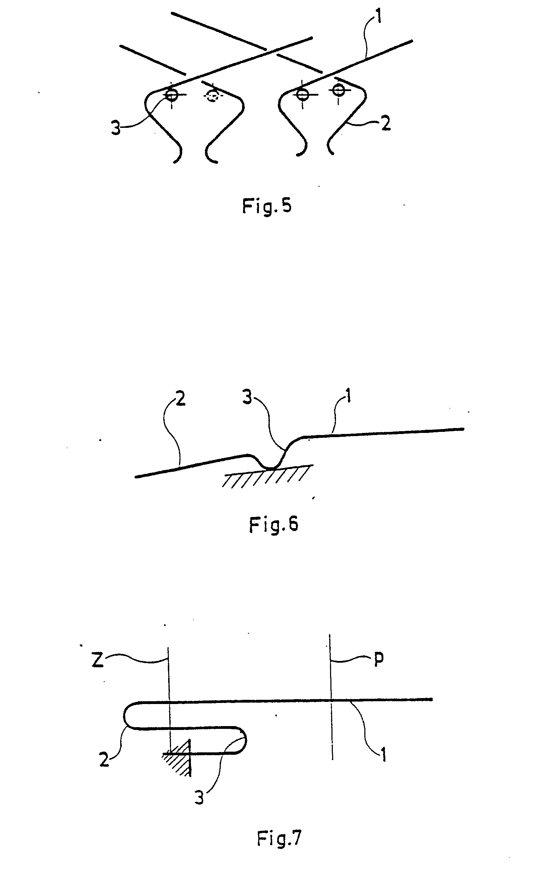

In the construction according to Figure 5, the extent of opening the locking members 1 is determined by butting on the moment-equalizing members 2. The moment-equalizing members 2 are spatial curvy geometrical configurations. This solution too is used to advantage — due to its small space demand — when with the use of adjacent parallel shafts the transverse opening of the locking members 1 is also ensured, and at the same time there is no need for separate buffer element determining the extent of opening of the locking members 1, i.e. the separate element is omissible as a result of the space geometry.

The formation 3 allowing the turn arranged between the locking member 1 and moment-equalizing member 2 of the construction according to Figure 6 is formed as a supporting flange on which the flow-blocking unit can turn and tilt, whereby it fulfils its function. This construction form is used to advantage especially in case of polluted agents, when the flow-blocking unit sits on the deposited pollution.

Figure 7 shows such construction form, where the formation 3 allowing the turn is essentially a torsion spring, the moment-equalizing member 2 and locking member 1 are arranged above each other and reaching into each other, the force line "p" and force line "z" are similarly on both sides of the formation 3 allowing the turn, but the torsion spring effect too has a role in the force play of the moment-equalizing member 2. This solution does not require holding method with pin or bearing, consequently it can be used to advantage in case of solutions requiring small space.

During operation of the flow-blocking units according to the invention, the locking member 1 controlling the free flow cross section is lifted by the ascending vapour or gas. The moment-equalizing member 2 — since it fundamentally determines the pressure loss of the apparatus — is selected according to the weight (mass) of the locking member 1 and according to the torque of the force component of the moment-equalizing member 2 acting through the centre of rotation of every flow-blocking unit. By suitable formation of the moment ratos, i.e. force effects "p" and "z" and moment arms "m", the pressure loss of the apparatus can be influenced to the required extent and set to the necessary value irrespective of the weight of locking member 1, but depending on the resistance factor.

The moment-equalizing member 2 and locking member 1 are made suitably of the same material with pin, or bearing-type axis of rotation, which does not exclude the use of different material. The moment equalizing member 2 may function with one or several locking member(s) 1, but it may fulfil other functions as well, as for instance it may be an axis of rotation, or may fill in the role of an element limiting the opening range of the locking members 1, or an element ensuring the simultaneous opening of the locking members 1, or a fluid distributor. Owing to the formation of the moment-equalizing member 2 it assists the transfer of material in that the dribbling fluid forms a film layer on the extension, then it drops down in tiny pearly drops, ensuring good fluid distribution in the full cross section of the phase-contacting plate. Formation of the flow-blocking unit allowing the turn around or along a real or imaginary axis a ring embracing the axis of rotation partially or fully, but it may be a supporting flange or torsion shaft or for instance pin or pin-end, or shaft turning in bearing.

During operation of the phase contacting apparatus, the members of the flow-blocking units open according to the load, or quantity of the lighter phase (generally gas or vapour) flowing upwards from the bottom, thereby allowing the downward flow of the heavier phase (generally fluid). The solution according to the invention is particularly advantageous in case of plates with cascade system, since the moment-equalizing members 2 ensures the fluid distribution as well, whereby it eliminates the wall-action or formation of liquid channel, which — as well known — deteriorates the efficiency of the whole apparatus.

In view of the foregoing, advantage of the invention under identical conditions is, that the loss is only a fraction of the pressure loss of the venting apparatuses generally used in the practice, hence it is applicable in vacuum operated apparatuses and in corrosion-aggressive agents.

The correct formation of the moment-equalizing members 2 allows operation of the cascade towers in their full flow cross section, since the uniformly distributed fluid dribbling down from the moment-equalizing member 2 intensively participates in the transfer of material and at the same time it makes the use of separate liquid distributors unnecessary, and this way it allows the reduced dimensions (weight and height) of the usual tower-type phase contacting apparatuses.

The flow-blocking units are producible in a simple way and at low cost, e.g. from plate or wire by bending and their assembly is easy.

## Claims

1. Phase-contacting apparatus mainly in chemical industrial or environment protection establishments, in which

a multiplicity of phase-contacting plates are arranged in a column, said plates permitting upward flow of a gas phase and downward flow of a liquid phase therethrough, whereby said liquid phase is supported by said plates thus to bring said liquid phase into intimate contact to said gas phase,

each of said phase-contacting plates comprises a plurality of flow-blocking units,

each of said flow-blocking units is mounted pivotable about a transverse axis and is deflectable by the upward flow of the gas phase thus controlling the downward flow of the liquid phase, and

at least part of the weight of each of said flow-blocking units about said transverse axis is counterbalanced, characterized in that

each of said flow-blocking units comprises at least one elongated locking member (1) pivotable about a transverse axis at one end thereof and at least one moment-equalizing member (2) operatively connected with the same end of said locking member (1) for balancing the torque applied to said locking member (1) about said transverse axis,

said locking members (1) together forming the surfaces of said phase-contacting plates and solely opening or closing the free flow cross section of the fluids, whereas said moment-equalizing members (2) do not affect the flow cross section of said fluids.

2. The phase-contacting apparatus according to claim 1, characterized in that at least one moment-equalizing member (2) is formed for co-action with several locking members (1) and is, if necessary, suitable for the simultaneous deflection of said locking members (1).

3. The phase-contacting apparatus according to claims 1 or 2, characterized in that the locking members (1) and the moment-equalizing members (2) are integral with each other and composed of the same material.

4. The phase-contacting apparatus according to one of the claims 1 to 3, characterized in that the moment-equalizing members (2) are formed by elongated strips arranged at about 90° to the transverse axis.

5. The phase-contacting apparatus according to one of the claims 1 to 3, characterized in that the moment-equalizing members (2) are spatial curvy geometrical configurations.

6. The phase-contacting apparatus according to one of the claims 3 to 5, characterized in that between the locking members (1) and the moment-equalizing members (2) there are formed supporting flanges on which the flow-blocking units can turn about their transverse axes.

7. The phase-contacting apparatus according to one of the claims 1 to 6, characterized in that the moment-equalizing members (2) comprise spring means.

8. The phase-contacting apparatus according to claim 7, characterized in that the spring means is a coil spring.

9. The phase-contacting apparatus according to claim 7, characterized in that the spring means is a torsion spring.

**Patentansprüche**

1. Phasenkontaktvorrichtung, hauptsächlich für chemische, industrielle oder Umweltschutzeinrichtungen, bei welcher

eine Vielzahl von Phasenkontaktplatten in einer Kolonne angeordnet ist, wobei die Platten einen durchgehenden Aufwärtsstrom einer gasförmigen Phase und einen Abwärtsstrom einer flüssigen Phase zulassen, wodurch die flüssige Phase von den Platten getragen wird und somit die flüssige Phase in innigen Kontakt mit der gasförmigen Phase dringt,

jede der Phasenkontaktplatten eine Vielzahl von die Strömung blockierenden Einheiten aufweist,

jede der die Strömung blockierenden Einheiten schwenkbar um eine querverlaufende Achse angebracht und durch den Aufwärtsstrom der gasförmigen Phase auslenkbar ist, so daß der Abwärtsstrom der flüssigen Phase gesteuert wird, und

wenigstens ein Teil der Masse einer jeden der die Strömung blockierenden Einheiten um die Querachse massenkomponensiert ist, dadurch gekennzeichnet, daß

jede der die Strömung blockierenden Einheiten wenigstens ein langgestrecktes Blockierelement (1), das um eine Querachse an seinem einen Ende schwenkbar ist, und wenigstens ein Momentenausgleichselement (2) aufweist, das wirkungsmäßig mit dem gleichen Ende des Blockierelements (1) zum Ausgleich des an dem Blockierelement (1) anliegenden Drehmoments um die Querachse verbunden ist,

Blockierelemente (1) zusammen die Oberflächen der Phasenkontaktplatten bilden und allein den freien Strömungsquerschnitt der Fluide freigeben oder schließen, wohingegen die Momentenausgleichselemente (2) den Strömungsquerschnitt der Fluide nicht beeinflussen.

2. Phasenkontaktvorrichtung nach Anspruch 1, dadurch gekennzeichnet, daß wenigstens ein Momentenausgleichselement (2) für ein Zusammenwirken mit mehreren Blockierelementen (1) ausgebildet und nötigenfalls für das gleichzeitige Auslenken der Blokkierelemente (1) geeignet ist.

3. Phasenkontaktvorrichtung nach Anspruch 1 oder 2, dadurch gekennzeichnet, daß die Blockierelemente (1) und die Momentenausgleichselemente (2) ein Stück miteinander bilden und aus dem gleichen Material zusammengesetzt sind.

4. Phasenkontaktvorrichtung nach einem der Ansprüche 1 bis 3, dadurch gekennzeichnet, daß die Momentenausgleichselemente (2) von länglichen Streifen gebildet werden, die unter etwa 90° zur Querachse angeordnet sind.

5. Phasenkontaktvorrichtung nach einem der Ansprüche 1 bis 3, dadurch gekennzeichnet, daß die Momentenausgleichselemente (2) räumlich gekrümmte geometrische Formen haben.

6. Phasenkontaktvorrichtung nach einem der Ansprüche 3 bis 5, dadurch gekennzeichnet, daß zwischen den Blockierelementen (1) und den Momentenausgleichselementen (2) Tragflansche ausgebildet sind, an denen sich die die Strömung blockierenden Einheiten um ihre Querachsen drehen können.

7. Phasenkontaktvorrichtung nach einem der Ansprüche 1 bis 6, dadurch gekennzeichnet, daß die Momentenausgleichselemente (2) Federeinrichtungen aufweisen.

8. Phasenkontaktvorrichtung nach Anspruch 7, dadurch gekennzeichnet, daß die Federeinrichtungen aus einer Schraubenfeder bestehen.

9. Phasenkontaktvorrichtung nach Anspruch 7, dadurch gekennzeichnet, daß die Federeinrichtungen aus einer Torsionsfeder bestehen.

**Revendications**

1. Appareil pour la mise en contact de phases dans des installations de l'industrie chimique ou de protection de l'environnèment et dans lequel

une multiplicité de plateaux de mise en contact des phases sont disposés dans une colonne, lesdits plateaux permettant un écoulement ascendant d'une phase gazeuse et un écoulement descendant d'une phase liquide entre eux, ladite phase liquide étant de ce fait supportée par lesdits plateaux, ce qui place ladite phase liquide en contact intime avec ladite phase gazeuse,

chacun desdits plateaux de mise en contact des phases comporte une pluralité d'unités de blockage de l'écoulement,

chacune desdites unités de blocage de l'écoulement est montée de manière à pouvoir pivoter autour d'un axe transversal et peut être fléchie par l'écoulement ascendant de la phase gazeuse, ce qui permet de commander l'écoulement descendant de la phase liquide, et

au moins une partie du poids de chacune desdites unités de blocage de l'écoulement autour dudit axe transversal est contrebalancée, caractérisé en ce que

chacune desdites unités de blocage de l'écoulement comporte au moins un organe allongé de verrouillage (1) pouvant pivoter autour d'un axe transversal au niveau de l'une de ses extrémités, et au moins un organe d'équilibrage de couple (2) raccordé de façon opérationnelle à la même extrémité dudit organe de verrouillage (1) pour équilibrer le couple appliqué audit organe de verrouillage (1) autour dudit axe transversal,

lesdits moyens de verrouillage (1) formant ensemble les surfaces desdits plateaux de mise en contact des phases et réalisant uniquement l'ouverture ou la fermeture de la section transversale d'écoulement libre des fluides, tandis que lesdits organes (2) d'équilibrage des couples ne modifient pas la section transversale d'écoulement desdits fluides.

2. Appareil pour la mise en contact de phases selon la revendication 1, caractérisé en ce qu'au moins un organe (2) d'équilibrage des couples est agencé de manière à coopérer avec plusieurs organes de verrouillage (1) et est approprié, le cas échéant, pour réaliser le fléchissement simultané desdits organes de verrouillage (1).

3. Appareil pour la mise en contact de phases selon la revendications 1 ou 2, caractérisé en ce que les organes de verrouillage (1) et les organes (2) d'équilibrage des couples sont solidaires entre eux et constitués par le même matériau.

4. Appareil pour la mise en contact de phases selon l'une des revendications 1 à 3, caractérisé en ce que les organes (2) d'équilibrage des couples sont formés par des bandes allongées disposées approximativement à 90° par rapport à l'axe transversal.

5. Appareil pour la mise en contact de phases selon l'une des revendications 1 à 3, caractérisé en ce que les organes (2) d'équilibrage des couples possèdent des formes géométriques spatiales gauches.

6. Appareil pour la mise en contact de phases selon l'une des revendications 3 à 5, caractérisé en ce qu'entre les organes de verrouillage (1) et les organes (2) d'équilibrage des couples se trouvent disposées des brides de support, sur lesquelles les unités de blocage de l'écoulement peuvent pivoter autour de leurs axes transversaux.

7. Appareil pour la mise en contact de phases selon l'une des revendications 1 à 6, caractérisé en ce que les organes (2) d'équilibrage des couples comprennent des moyens en forme de ressort.

8. Appareil pour la mise en contact de phases selon la revendication 7, caractérisé en ce que les moyens en forme de ressort sont constitués par un ressort hélicoîdal.

9. Appareil pour la mise en contact de phases selon la revendication 7, caractérisé en ce que les moyens en forme de ressort sont constitués par un ressort de torsion.

Fig.1

Fig.2

Fig.3

Fig.4

Fig.5

Fig.6

Fig.7